# EUROPÄISCHE PATENTSCHRIFT

(11) **EP 2 147 825 B1**
(45) Veröffentlichungstag und Bekanntmachung des Hinweises auf die Patenterteilung: **23.11.2011**
(21) Anmeldenummer: 08013252.5
(22) Anmeldetag: 23.07.2008
(51) Int. Cl.: B60Q 7/00

(54) **Zusammenklappbares Warndreieck**
Foldable warning triangle
Triangle de signalisation pliable

(43) Veröffentlichungstag der Anmeldung: 27.01.2010
(73) Patentinhaber: Holthaus Medical GmbH & Co. KG, 42899 Remscheid (DE)
(72) Erfinder: Mangold, Rainer Dr., 89542 Herbrechtingen (DE); Kumpf, Siegfried Dr., 73340 Amstetten (DE); Albert, Susanne, 89233 Neu-Ulm (DE); Greghi, Giannino, 46031 Bagnolo S. Vito (IT)
(74) Vertreter: Alber, Norbert

(56) Entgegenhaltungen:
- CZ-U1- 17 722
- CZ-U1- 17 723
- DE-A1- 3 419 151
- DE-A1- 4 210 249
- DE-A1- 4 432 901
- DE-U1-202005 019 711

## Beschreibung

Die Erfindung betrifft ein zusammenklappbares Warndreieck für den Straßenverkehr. Jeder Auto- und LKW-Fahrer ist dazu verpflichtet, im Fahrzeug ein Warndreieck mitzuführen, welches im Falle einer Panne oder eines Unfalls zur Sicherung der Unfallstelle aufgestellt wird. Für Motorradfahrer kann dies ebenfalls wünschenswert sein. Dabei sind für Kraftfahrzeuge bisher Warndreiecke bekannt, bei denen die drei Schenkel des Warndreiecks auseinandernehmbar und aufeinander zusammenklappbar sind, so dass sich ein längliches, kompaktes Paket zum Verstauen im Nichtbenutzungsfall ergibt.

Für den Zweiradbereich aber auch für Automobile hat sich jedoch gezeigt, dass auch derartige zusammengeklappte Warndreiecke immer noch zu große Außenabmessungen aufweisen. Daher sind im Stand der Technik Warndreiecke entwickelt worden, bei denen die drei Schenkel noch zusätzlich mit Gelenken unterteilt sind, damit die einzelnen Schenkelteile eines jeden Schenkels nochmals aufeinandergeklappt werden können, um so die Außenabmessungen und damit das Packmaß insgesamt noch weiter zu reduzieren. So ist beispielsweise aus dem deutschen Gebrauchsmuster DE 92 16 497.8 U1 ein mehrfach zusammenlegbares Warndreieck bekannt, bei welchem die Schenkel durch mittige Gelenke zum Zusammenklappen unterteilt sind und die einzelnen Teilabschnitte jedes Schenkels zudem noch mit zusammenschiebbaren Teilleisten ausgebildet sind. Dabei sind die Gelenke mit einer Schwenkachse in der Aufspannebene des Warndreiecks gebildet, so dass recht aufwendige Scharnierverbindungen über die gesamte Breite der Schenkel erforderlich sind. Zudem ist hier die Gesamtdicke auch des zusammengelegten Warndreiecks noch relativ hoch, da die schiebebeweglich zueinander montierten Teilleisten der einzelnen Schenkelteile zumindest lokal zu einer deutlichen Verdickung des jeweiligen Schenkels des Warndreiecks führen.

Des Weiteren ist ein derartiges zusammenklappbares Warndreieck insbesondere für die Mitführung auf Motorrädern aus der deutschen Offenlegungsschrift DE 44 32 901 A1 bekannt. Der Grundschenkel des Warndreiecks wird hier aus einer metallischen Trägerplatte gebildet, die mittig eine lösbare Verbindung in Form eines Druckknopfes aufweist. Die beiden aufragenden Schenkel sind ebenfalls mittig unterteilt und über jeweilige Gelenke schwenkbar miteinander verbunden. Dadurch können bei diesem bekannten Warndreieck nach einem Lösen der Druckknopfverbindung die einzelnen Teile zickzackförmig zusammengeklappt werden, so dass sie im zusammengelegten Zustand allesamt übereinanderliegen. Durch die hier mittig von den Schenkeln angeordneten Gelenke mit einer Schwenkachse im Wesentlichen senkrecht zur Aufspannebene sind die jeweiligen Schenkelteile innerhalb eines Schenkels stufenförmig versetzt zueinander angeordnet. Dadurch wird hier im aufgespannten Zustand des Warndreiecks keine durchgängig ebene Reflektorfläche gebildet. Die einzelnen Reflektorteile sind stufenförmig voneinander abgesetzt und bilden abwechselnd Erhöhungen und Vertiefungen. Außerdem ist die metallische Trägerplatte bei diesem Warndreieck recht aufwendig und separat herzustellen und vergrößert letztendlich das Packmaß im zusammengelegten Zustand durch vorragende Abschnitte.

Ein weiteres gattungsgemäßes Warndreieck ist aus der CZ 17723 bekannt, bei dem die Schenkel des Warndreiecks aus zwei Schenkelteilen bestehen, die um Gelenkachsen so verschwenkt werden können, dass die Schenkelteile eines Schenkels aufeinander zu liegen kommen, wobei im zusammengeklappten Aufbewahrungszustand die Gelenkachsen parallel zueinander verlaufen.

Demgegenüber ist es die Aufgabe der vorliegenden Erfindung, ein zusammenklappbares Warndreieck, insbesondere zum Mitführen auf Motorrädern, mit möglichst kompakten Außenmaßen im zusammengeklappten Zustand vorzuschlagen, welches möglichst einfach aufzustellen ist und bei niedrigen Herstellungskosten realisierbar ist.

Diese Aufgabe wird mit dem erfindungsgemäßen Warndreieck mit den Merkmalen des Anspruchs 1 gelöst. Vorteilhafte Ausgestaltungen und Weiterbildungen der Erfindung sind Gegenstand der abhängigen Ansprüche.

Nach der Erfindung wird ein zusammenklappbares Warndreieck für den Straßenverkehr mit drei Schenkeln vorgeschlagen, welche zwischen einem zusammengeklappten Aufbewahrungszustand und einem Aufstellungszustand verstellbar sind, wobei das Warndreieck neben den das eigentliche Warndreieck bildenden Schenkeln Füße aufweist, welche insbesondere ausstellbar sind, und die Schenkel jeweils aus mindestens zwei separaten Schenkelteilen gebildet sind, welche paarweise über Gelenke miteinander verbunden sind. Jeder Schenkelteil weist dabei eine Fläche auf, die in der Aufspannfläche des Warndreiecks liegt. Beiden erfindungsgemäßen Warndreieck sind die Gelenke zwischen den Schenkelteilen derart exzentrisch zur Mittenlängsachse der Fläche der Schenkelteile versetzt angeordnet, dass im zusammengeklappten bzw. zusammengelegten Aufbewahrungszustand des Warndreiecks die exzentrischen Gelenke in einer gemeinsamen Achse in etwa senkrecht zur Aufspannfläche des Warndreiecks übereinanderliegen. Das bedeutet, dass die jeweiligen exzentrisch versetzten Gelenke in der Mitte jedes Schenkels so zwischen den Schenkelteilen positioniert sind, dass sie im zusammengeklappten Zustand des Warndreiecks in Übereinanderlagerung gelangen. Sie befinden sich an ein und derselben Stelle des zusammengeklappten Pakets und führen daher kaum zu einer Vergrößerung der Außenabmessungen und damit des Packmaßes insgesamt des zusammengeklappten Warndreiecks. Durch das exzentrische bzw. seitlich versetzte Anordnen der mittigen Gelenke wird erreicht, dass die einzelnen Schenkelteile bündig zueinander aufgestellt werden können und die Flächen der Schenkelteile annähernd in einer Ebene liegen. Dies führt zu einem kontinuierlich durchgehenden Reflektorband je Schenkel des Warndreiecks. Außerdem wird durch die erfindungsgemäßen exzentrisch versetzten Gelenkverbindungen die Bauhöhe des Schenkels im Gelenkbereich nicht durch das Einbringen des Gelenks unnötig erhöht. Die exzentrisch bzw. seitlich versetzt angeordneten Gelenke können vorzugsweise eine geringere Höhe aufweisen als die Dicke der Schenkelteile samt Reflektoren. Dementsprechend wird auch die Funktionsweise beim Auf- und Zusammenklappen des Warndreiecks durch keinerlei vorragende Gelenkstücke beeinträchtigt. Es wird ferner vermieden, dass durch etwaig vorragende Achsen oder Gelenkelemente die angrenzenden Reflektorteile des Warndreiecks beschädigt werden können. Das erfindungsgemäβe warudreieck ist dardurch gekennzeichet, die Gelenkachsen dabei bei allen exzentrischen Gelenken, die die Schenkelteile verbinden, im Wesentlichen senkrecht zur Aufspannfläche des Warndreiecks verlaufen.

Dabei kann in etwa senkrecht zur Aufspannebene einen Bereich von +/- 10°, insbesondere 5° um die senkrechte zur Aufspannfläche bedeuten.

Nicht zuletzt wird durch die erfindungsgemäße exzentrische, seitliche Anordnung der Gelenke zwischen einzelnen Schenkelteilen ein sehr geringes Packmaß im zusammengeklappten Zustand des Warndreiecks erreicht: Die einzelnen Schenkelteile liegen im zusammengeklappten Zustand sehr eng aufeinander, da die Gelenke seitlich angeordnet sind und nicht zu einer lokalen Erhöhung der Dicke führen. Das relativ kleine Packmaß hat den Vorteil, dass insbesondere beim Mitführen auf Motorrädern der ohnehin begrenzte Verstauraum nicht unnötig durch das gesetzlich vorgeschriebene Warndreieck in Beschlag genommen wird. Das Packmaß ist durch die erfindungsgemäße Ausgestaltung des Warndreiecks außerdem ein recht flaches Packmaß, das vorteilhafterweise auch in Zwischenräumen leicht verstaubar ist. Schließlich kann durch die erfindungsgemäße Gestaltung des zusammenklappbaren Warndreiecks letzteres mit recht wenig Herstellungsaufwand realisiert werden. Für die Reflektoren und/oder die einzelnen Schenkelteile können jeweils paarweise gleiche Varianten für alle drei Schenkel des Warndreiecks verwendet werden. Dadurch wird verhindert, dass beispielsweise für den unteren Basisschenkel eine andere Art von Schenkel und/oder Reflektoren eingesetzt werden muss, wie es bisher im Stand der Technik der Fall war.

Dabei kann vorgesehen sein, dass hinsichtlich der Aufspannfläche des Warndreiecks der eine seitliche Schenkel vor, das heißt auf der Vorderseite, und der andere hinter, das heißt auf der Hinterseite des Basisschenkels an diesem angelenkt ist. Dabei können zwischen den Seitenschenkeln und dem Basisschenkel insbesondere zentrische Gelenke vorgesehen sein, deren Schwenkachse senkrecht zur Aufspannfläche des Warndreiecks verläuft. Die Schwenkachsen der zentrischen Gelenke schneiden dabei die Mittenlängsachsen der verbundenen Schenkel. Hierdurch wird erzielt, dass dadurch, dass die Seitenschenkel auf verschiedenen Seiten des Basisschenkels an diesen angebunden sind, durch Auseinanderklappen des zusammengeklappten Warndreiecks im Bereich der übereinanderliegenden exzentrischen Gelenke alle drei Schenkel gleichzeitig mit einem Griff auseinandergeklappt werden, so dass die Schenkelteile eines Schenkels hinsichtlich ihrer Mittenlängsachsen übereinstimmen.

Nach einer vorteilhaften Ausgestaltung des erfindungsgemäßen Warndreiecks liegen die Schenkelteile eines jeden Schenkels im zusammengeklappten Aufbewahrungszustand jeweils paarweise mit den in Längsrichtung verlaufenden Schmalseiten aneinandergrenzend gegenüber. Die beiden Schenkelteile eines jeden Schenkels des Warndreiecks werden durch die Gelenkanordnung nach der Erfindung im zusammengeklappten Zustand in etwa in einer Ebene nebeneinandergelegt, so dass die Längsschmalseiten beider Schenkelteile sich paarweise gegenüberliegen. Dadurch wird ein sehr flaches und kompaktes Packmaß im zusammengelegten Zustand bereitgestellt. Während im Stand der Technik beispielsweise ein zickzackförmig zusammenlegbares Warndreieck zu einem recht hohen und gleichzeitig breiten Endzustand des zusammengeklappten Warndreiecks führte, wird hierdurch erfindungsgemäß ein eher flaches als hohes Paket geboten. Letzteres kann leicht auch bei beengteren Raumverhältnissen verstaut werden, wie es beispielsweise im Bereich von Motorradtaschen, aber auch bei vielen Automobilen der Fall ist.

Nach einer weiteren vorteilhaften Ausgestaltung der Erfindung ist die Vorderseite der Schenkel des Warndreiecks jeweils mit Reflektoren derart versehen, dass eine Art durchgängiges Reflektorband entlang des Außenumfangs des Warndreiecks gebildet wird. Durch die exzentrisch angeordneten Gelenke, welche somit nicht im Bereich von Reflektoren liegen, sind die Reflektoren im ausgeklappten Zustand annähernd direkt angrenzend zueinander positioniert. Es ergibt sich optisch ein reflektierendes, kontinuierlich durchgehendes Band in Form eines Dreiecks als Warnhinweis. Die Reflexionseigenschaft des Warndreiecks ist erhöht.

Nach einer weiteren vorteilhaften Ausgestaltung der Erfindung sind die Reflektoren an der Fläche oder Vorderseite eines jeweiligen Schenkelteils eines Schenkels derart angebracht, dass sie in ein und derselben Ebene zumindest innerhalb eines Schenkels liegen. Die erfindungsgemäße Versetzung des Gelenks an die Seite von den Schenkelteilen ermöglicht es, dass die Schenkelteile und damit auch die Reflektoren durchgehend in ein und derselben Ebene innerhalb eines Schenkels des Warndreiecks liegen. Dies hat den Vorteil, dass eine relativ plane, durchgehende Reflektorebene im ausgeklappten Zustand zumindest pro Schenkel bereitgestellt wird. Eine unnötige Übereinanderlagerung und Verschachtelung der Schenkelteile zueinander ist so vermieden.

Nach einer weiteren vorteilhaften Ausgestaltung des erfindungsgemäßen Warndreiecks sind die Füße bzw. Standfüße in Form von nach vorne und nach hinten vom Warndreieck vorragenden Flacheisen oder Drahtfüßen realisiert. Die Flacheisenfüße haben den Vorteil, dass sie im Vergleich zu Fußkonstruktionen mit einer Basisplatte eine recht geringe Abmessung aufweisen und beispielsweise vollständig in den Zwischenraum zwischen die einzelnen Schenkelteile im zusammengeklappten Zustand eingelegt oder eingesetzt werden können. Darüber hinaus besitzen sie gegenüber Drahtfüßen ein größeres Gewicht und stabilisieren so das Warndreieck. Nach einer diesbezüglichen alternativen Ausgestaltung der Erfindung entspricht die Länge der Füße in etwa der Länge eines jeden Schenkelteils, so dass sie im zusammengeklappten Zustand vollständig innerhalb der Außenmaße der Schenkelteile bzw. des aus den Schenkelteilen gebildeten Packens angeordnet werden können. Die Füße erhöhen damit nicht das Packmaß des Warndreiecks im zusammengeklappten Zustand, und sie verschwinden vollständig in ohnehin vorhandenen Zwischenräumen zwischen den einzelnen Schenkelteilpaaren. Die Füße sind dazu mit einem einen Basisschenkel bildenden Schenkel gelenkig verbunden, wobei der Basisschenkel der Schenkel ist, der im aufgestellten Zustand im Wesentlichen parallel zum Boden verläuft.

Nach einer weiteren vorteilhaften Ausgestaltung der Erfindung sind die exzentrischen Gelenke zur Verbindung der einzelnen Schenkelteile jeweils seitlich vorragend von den Schenkeln angeordnet. Durch die seitliche Anordnung bzw. seitlich vorragende Anordnung der Gelenke zwischen den jeweils paarweise zueinandergehörenden Schenkelteilen kann die Gelenkart so gewählt sein, dass sie gleich oder geringer ist als die Dicke der Schenkelteile selbst. Dies kann beispielsweise dadurch realisiert werden, dass jeweils ein Gelenkabschnitt jedes Schenkelteils als lappenartiger Vorsprung realisiert ist, welcher eine übereinstimmende Bohrung aufweist, in welcher eine Gelenkachse eingesetzt werden kann. Die Gelenkachse verläuft im Wesentlichen senkrecht zur Aufspannebene des Warndreiecks. Andere Realisierungsarten der erfindungsgemäßen exzentrisch versetzten Gelenke sind ebenfalls denkbar, ohne den Rahmen der vorliegenden Erfindung zu verlassen.

Nach einer weiteren vorteilhaften Ausgestaltung des erfindungsgemäßen Warndreiecks sind an dem unteren Schenkel des Warndreiecks, d. h. an dem horizontalen Basisschenkel, jeweils vorragende Halterungen für die Füße bzw. Standfüße des Warndreiecks angebracht. Vorzugsweise ragen diese Halterungen für Füße auf der gleichen Seite seitlich von den Schenkelteilen des unteren Schenkels vor, wie es für das exzentrische Gelenk bei diesem Schenkel der Fall ist. Auf diese Art und Weise sind die Halterungen für die Füße des Warndreiecks im zusammengeklappten Zustand zwischen den Schenkelteilen auf der gegenüberliegenden Seite zu dem exzentrischen Gelenk positioniert. Dadurch ergibt sich keine unnötige Vergrößerung oder Verbreiterung des zusammengeklappten Pakets des Warndreiecks. Das Packmaß des Warndreiecks ist so gering als möglich. Nach einer diesbezüglichen alternativen Ausgestaltung der Erfindung sind die Halterungen für die Füße im Verhältnis zur Mittenlängsachse des unteren Schenkels derart seitlich vorragend angeordnet, dass sie im zusammengeklappten Zustand zwischen den Schenkelteilen gegenüberliegend von dem exzentrischen Gelenk angeordnet sind. Damit wird ein gleichbleibend breiter Zwischenspalt zwischen den Längsschmalseiten der jeweils gegenüberliegend zusammengeklappten Schenkelteile geboten, der sich idealerweise als Aufnahmeraum für entsprechend gestaltete Füße des Warndreiecks im Aufbewahrungszustand darbietet.

Nach einer weiteren vorteilhaften Ausgestaltung der Erfindung sind an jedem Schenkel des Warndreiecks, d. h. den drei Schenkeln, identische Paare an Reflektoren vorgesehen. Aufgrund der spezifischen Positionierung der Verbindungsgelenke zwischen den einzelnen Schenkelteilen seitlich versetzt bzw. exzentrisch zur Mittenlängsachse ist es bei der Erfindung nicht mehr erforderlich, unterschiedliche Schenkelteile bzw. Reflektoren für den unteren Schenkel und die aufragenden Schenkel jeweils zu konstruieren. Erfindungsgemäß können die jeweiligen Schenkelteilpaare identisch zueinander sein, was im Hinblick auf die Herstellung und Realisierung des Warndreiecks deutliche Vorteile hat. Besonders bevorzugt weisen alle drei Schenkel jeweils einen Reflektor von einem ersten Typ und einen Reflektor von einem zweiten Typ auf, z.B. Typ A und Typ B, die jeweils einem Schenkelteil zugeordnet sind. Die Reflektoren der verschiedenen Typen sind umlaufend um das Warndreieck, insbesondere abwechselnd im aufgestellten Zustand vorgesehen. Die Reflektoren der verschiedenen Typen können voneinander verschieden sein.

Um ein Übereinanderzuliegenkommen der Gelenke zu ermöglichen, kann vorgesehen sein, dass das Gelenk zwischen den Schenkelteilen des Basisschenkels bei aufgestelltem Warndreieck nach außen weist. Die beiden anderen exentrischen Gelenke der Seitenschenkel, die am Basisschenkel über in der jeweiligen Längsmittelachse der Schenkel angeordnete Gelenke drehbar angebracht sind, jedoch auf das Warndreieckinnere und damit aufeinander zuweisen.

Weiterhin kann vorgesehen sein, dass die zwei Seitenschenkel miteinander lösbar verbindbar sind, wobei hierbei zum Beispiel an einen der beiden Seitenschenkel ein Dorn oder Stift vorgesehen sein kann, die in eine Ausnehmung des anderen Seitenschenkels eingeschoben oder eingeclipst werden kann. Möglich ist jedoch auch eine Verbindung mittels Klettverschlüssen oder Druckknöpfen et cetera.

Es kann vorgesehen sein, dass zwischen den Schenkeln eine Plane einspannbar ist, die vorzugsweise eine Signalfarbe aufweist oder weitere Reflektorelemente trägt, um die Erkennbarkeit zu erhöhen.

Das Warndreieck kann dabei bis auf die Füße aus Kunststoffen bestehen und metallfrei ausgebildet sein.

Schließlich kann es zusammen mit Aufnahmen oder Taschen, die insbesondere hinsichtlich der Größe an das zusammengeklappte Warndreieck angepasst sind, konfektioniert werden.

Ein Ausführungsbeispiel der Erfindung wird im Folgenden anhand der beigefügten Figuren der Zeichnung mehr im Detail beschrieben werden. In der Zeichnung zeigen:
- Fig. 1: eine Draufsicht eines Ausführungsbeispiels eines erfindungsgemäßen Warndreiecks im aufgestellten Zustand;
- Fig. 2: eine Ansicht von oben eines erfindungsgemäßen Warndreiecks aus der Fig. 1 in einer teilweise aufgestellten Darstellung;
- Fig. 3: das Ausführungsbeispiel eines erfindungsgemäßen Warndreiecks nach den vorangegangenen Figuren im zusammengeklappten Aufbewahrungszustand für den Transport;
- Fig. 4: das Warndreieck gemäß Figur 3 in einer teilweise ausgeklappte Darstellung.

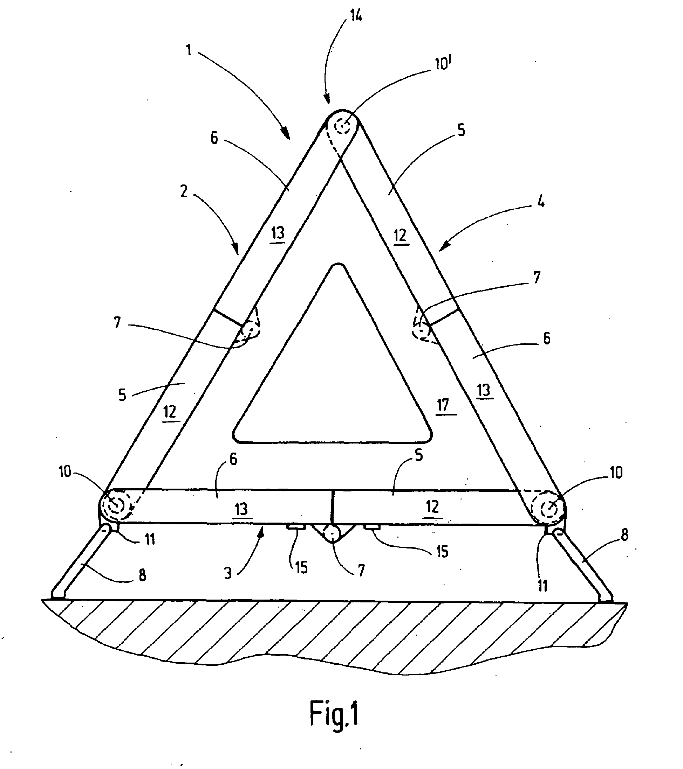

In der Fig. 1 ist in einer Draufsicht ein Ausführungsbeispiel eines erfindungsgemäßen zusammenklappbaren Warndreiecks 1 im aufgestellten Zustand gezeigt. Bei diesem Ausführungsbeispiel sind die drei Schenkel 2, 3, 4 des Dreiecks mittig unterteilt und jeweils über ein exzentrisches Gelenk 7 paarweise miteinander verbunden. Der Schenkel 2 ist mit dem Schenkel 4 an dem oberen Punkt über eine lösbare Verbindung 14 zusammengesteckt, welche hier in Form eines V-förmigen geöffneten Lochs und eines im Durchmesser entsprechenden Gelenkstifts am Gelenk 10' realisiert ist. An dieser Stelle, d. h. der oberen Spitze des Dreiecks, kann das Warndreieck damit geöffnet werden und für einen Transport oder die Aufbewahrung auf ein kleinstmögliches Packmaß zusammengeklappt werden. Dazu sind die Schenkel 2, 3, 4 nicht nur auf sich selbst zusammenklappbar, wie es im Stand der Technik bekannt ist, sondern zudem noch an den Gelenken 7 unterteilt, so dass die jeweiligen Schenkelteile 5, 6. jedes Schenkels 2, 3, 4 nochmals auf sich selbst zusammengeklappt werden können. Auf diese Weise kann das erfindungsgemäße Warndreieck auf ein sehr kleines Packmaß zusammengelegt bzw. zusammengeklappt werden und ist insbesondere, jedoch nicht ausschließlich, bestens für eine Mitnahme durch Motorradfahrer angepasst. Die Schenkel 2, 3, 4 sind mit Reflektoren 12, 13 vom Typ A und Typ B an den jeweiligen Schenkelteilen 5, 6 bestückt, wobei jeder Schenkel 2, 3, 4 einen Reflektor 12, 13 vom Typ A und einen Reflektor vom Typ B aufweist. Durch die exzentrisch bzw. seitlich verlagert angeordneten Gelenke 7 zwischen den jeweiligen Schenkelteilen 5, 6 können bei allen drei Schenkeln 2, 3, 4 jeweils zwei identische Reflektoren 12, 13 eingesetzt werden. Dies reduziert den Herstellungsaufwand, und es ergibt sich ein durchgängig gleichbleibendes Reflektorband am Außenumfang des Warndreiecks, was eine verbesserte Sicherheit im Einsatz bedeutet. Bei diesem in der Fig. 1 gezeigten Ausführungsbeispiel sind die mittigen Gelenke 7 zwischen den jeweiligen Schenkelteilen 5, 6 bei den beiden oberen Schenkeln 2, 4 nach innen seitlich versetzt bzw. exzentrisch zur Mittenlängsachse der Schenkel 2, 4 positioniert. Nach der vorliegenden Erfindung sind die Gelenke 7 aus dem Bereich der Schenkel 2, 3, 4 herausgenommen und bewusst seitlich von den Reflektoren und/oder den Schenkelteilen 5, 6 angeordnet, um das Packmaß des zusammengeklappten Warndreiecks noch weiter zu verringern. Bei dem unteren Schenkel 3, welcher im Stand der Technik als ein Basisschenkel häufig anders gestaltet ist als die oberen Schenkel 2, 4, ist das mittige Gelenk 7 ebenfalls exzentrisch zur Mittenlängsachse des Schenkels 3 positioniert, jedoch hier nicht nach innen zum Warndreieck hin, sondern an der Außenseite, d. h. nach unten in Fig. 1. Der Schenkel 3 ist ansonsten identisch zu den beiden anderen Schenkeln 2, 4, und insbesondere ist ein gleichgestaltetes Paar von Reflektoren 12, 13 an den Schenkelteilen 5, 6 angebracht.

An den Enden des unteren Schenkels 3 sind ferner Halterungen 11 für Füße 8, 9 vorgesehen, welche in diese Halterungen 11 eingesteckt werden können. Im zusammengeklappten Zustand werden die Füße 8, 9 zwischen den Schenkelteilen 5, 6 eingesteckt und beispielsweise über Klemmhalterungen 11, 15 befestigt. Bei dem dargestellten Ausführungsbeispiel eines zusammenklappbaren Warndreiecks nach der Erfindung ist im mittleren Bereich zwischen den mit Reflektoren 12, 13 ausgestatteten Schenkeln 2, 3, 4 eine Plane 17 mit dreieckförmiger Öffnung eingespannt (vgl. Fig. 1), welche vorzugsweise in einer Signalfarbe realisiert ist. Das Warndreieck nach der Erfindung kann jedoch auch ohne eine solche Plane 17 im mittleren Bereich nur mit den äußeren Reflektoren 12, 13 als ein kontinuierlich durchgehendes Band auf den Schenkeln 2, 3, 4 realisiert sein. Die exzentrische Positionierung der Gelenke 7 ist bei diesem Ausführungsbeispiel durch jeweils von den Schenkelteilen 5, 6 vorragende Ansatzstücke oder Lappen verwirklicht, welche eine übereinstimmende Bohrung aufweisen, in die ein Gelenkstift des Gelenks 7 eingesetzt wird. Die Dicke des exzentrischen Gelenks 7 nach der Erfindung kann geringer gehalten sein als die Dicke der danebenliegenden Schenkelteile 5, 6 selbst, so dass durch die weitere Unterteilung der Schenkel 2, 3, 4 und die gelenkige Verbindung über die Gelenke 7 keine merkbare Vergrößerung des Packmaßes des zusammengeklappten Warndreiecks entsteht.

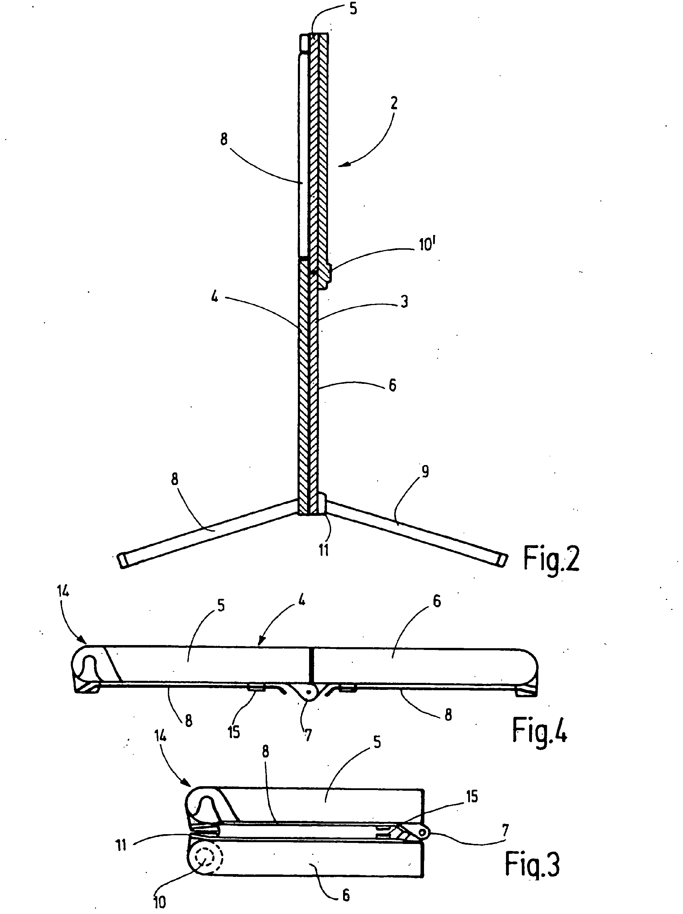

In der Fig. 2 ist das aufgestellte Warndreieck nach dem Ausführungsbeispiel der Fig. 1 in einer Ansicht von oben gezeigt, wobei es noch nicht vollständig montiert ist. Die Füße 8, 9 eines Fußpaares ragen nach vorne und nach hinten von der Aufspannebene des Warndreiecks 1 vor. Das zweite Fußpaar 8,9 ist noch nicht ausgeklappt. Dafür sind Halterungen 11 am unteren Rand des Warndreiecks 1 vorgesehen, in welchen die Füße 8, 9 gehalten sind. Bei diesem Ausführungsbeispiel sind die Füße in einem leichten Winkel nach unten und schräg nach außen geneigt (vgl. Fig. 1 und Fig. 2), vorzugsweise im Winkel der aufragenden Schenkel 2, 4 des Warndreiecks 1. Die Halterung 11 für die Füße 8, 9 ist in diesem Ausführungsbeispiel als eine KlemmHalterung gestaltet, d. h. dass die Füße 8, 9 in die Halterung eingesteckt und klemmend gehalten werden und in dieser verschwenkbar und dadurch ausstellbar sind. Im zusammengeklappten Zustand, welcher in der Fig. 3 in einer Draufsicht dargestellt ist, werden die Füße 8, 9 in den Halterungen 11 verschwenkt und zwischen die Schenkelteile 5, 6 geklappt. Dafür sind entsprechende Halterungen 11, 15 an den Schenkelteilen 5, 6 vorgesehen, welche beispielsweise als Klemmsitze realisiert sein können. In der Ansicht der Fig. 2 ist ferner erkennbar, dass die jeweiligen Paare von Schenkelteilen 5, 6 eines Basisschenkels 3 in ein und derselben Ebene liegen, wobei auch die Schenkelteile 5,6 der Schenkel 2 und 4 in einer Ebene liegen. Dies ist nach der Erfindung möglich, da die Gelenke 7 zwischen den jeweiligen Schenkelteilen 5, 6 nicht im Bereich der Schenkelteile 5, 6 selbst liegen, sondern seitlich versetzt exzentrisch zur Mittenlängsachse angeordnet sind. In der in der Fig. 2 gezeigten Ansicht ist erkennbar, dass die exzentrischen Gelenke 7 nicht von der Vorder- und Rückseite des Warndreiecks vorragen, sondern in der gleichen Ebene wie die Schenkel 2, 3 und 4 liegen. Zur vollständigen Aufstellung des Warndreiecks ist jetzt noch das zweite Fußpaar 8,9 auszuklappen, von dem in Figur 2 nur der Fuß 9 sichtbar ist. Darüber hinaus müssen die Schenkel 2, 4 miteinander verbunden werden, wobei der Schenkel 4, der die Aufnahme für den Gelenkstift 10' aufweist und der Schenkel 2 so verbogen werden, dass der Gelenkstift 10' in die Aufnahme gefügt werden kann. Hierdurch werden die Schenkel gegeneinander verspannt und die Gesamtstabilität des Warndreiecks erhöht.

Die Fig. 3 zeigt das beschriebene Ausführungsbeispiel eines erfindungsgemäßen Warndreiecks im zusammengeklappten Zustand. Ausgehend von dem aufgestellten Zustand, der in der Fig. 1 gezeigt ist, wird zunächst die lösbare Verbindung 14 an der oberen Ecke des Warndreiecks 1 gelöst, indem der Schenkel 2 von dem Schenkel 4 entfernt wird. Anschließend werden die Schenkel 2 und 4 auf den Schenkel 3 um die Gelenke 10, die nicht exzentrisch angeordnet sind, verschwenkt und zusammengeklappt, so dass die Schenkel 2, 3 und 4 parallel zu liegen kommen (Fig. 4). Die Gelenke 7 liegen dabei so hintereinander, dass die Schwenkachsen der Gelenke 7 in einer Achse liegen. Eine weitere Verschwenkung erfolgt dann ausgehend von der Anordnung gemäß Figur 3 um die drei Gelenke 7, die die Schenkelteile 5 und 6 der Schenkel 2,3 und 4 verbinden. Dabei ist ein Seitenschenkel 4 vor dem Basisschenkel 3 und der andere Schenkel 2 hinter dem Basisschenkel 3 in der Darstellung angelenkt, so dass die Schenkel 2 und 4 parallel zum Schenkel 3 gelegt werden können, ohne die Gelenke 7 zu verschwenken. Durch Zusammenlegung in den Gelenken 7 werden dann alle drei Schenkel 2, 3 und 4 gleichzeitig hinsichtlich ihrer Schenkelteile zusammengelegt. Dadurch wird das Aufstellen vereinfacht und kann schneller erfolgen. Die Füße 8, 9 werden in den Halterungen 11 verschwenkt und in den Zwischenraum zwischen den paarweise zusammengelegten Schenkelteilen 5, 6 in die Klemmhalterung 15 eingeklipst. Letztendlich entsteht ein sehr kompaktes zusammengeklapptes Warndreieck, welches aufgrund des Aufnahmezwischenraums für die Füße 8, 9 in der Breite kaum größer ist als das Doppelte der Breite eines jeden Schenkelteils 5, 6. In der Höhe ist das Packmaß auf die dreifache Dicke eines Schenkelteils 5, 6 mitsamt Reflektoren 12, 13 begrenzt, da die einzelnen Schenkelteile 5, 6 sehr dicht aufeinander zusammengeklappt werden können (vgl. Seitenansicht der Fig. 2). Damit ist im zusammengeklappten Zustand ein kompaktes Paket des Warndreiecks realisiert, welches beispielsweise in einer entsprechenden Tasche oder einem Köcher aufbewahrt werden kann. Die exzentrische Positionierung der Gelenke 7 erlaubt es, das Warndreieck auf ein sehr kleines Maß zusammenzulegen.

Die Erfindung ist nicht auf das dargestellte Ausführungsbeispiel beschränkt und umfasst alle Varianten und Ausführungsformen, welche in die Reichweite der nachfolgenden Ansprüche fallen. Insbesondere können die Füße 8, 9 anders gestaltet sein, und es können beispielsweise gelenkig angekoppelte Füße 8, 9 anstatt der einsteckbaren Füße bei diesem Ausführungsbeispiel realisiert werden. Auch können die Füße anstatt als Flacheisenfüße in Form von Drahtfüßen realisiert sein, welche im zusammengeklappten Zustand ebenso keine Erhöhung des Packmaßes des Warndreiecks mit sich bringen. Des Weiteren kann die lösbare Verbindung 14 an einer anderen Position und in anderer Art und Weise realisiert sein. Anstatt eines V-förmig geöffneten Befestigungslochs mit Befestigungszapfen am Gelenk 10' kann beispielsweise eine Klemm-, Steck- oder Schraubverbindung als lösbares Verbindungsmittel zwischen den Schenkeln 2, 4 verwendet werden. Ferner ist das erfindungsgemäße Warndreieck mit oder ohne Signalplane im Inneren der Schenkel 2, 3, 4 realisierbar, ohne dass der erfindungsgemäße Kern eines sehr kompakt zusammengelegten Warndreiecks verlassen wird. Schließlich können die Schenkelteile 5, 6 und deren Reflektoren 12, 13 in der Form und Breite variieren, solange die Gelenkverbindung zwischen den einzelnen Paaren von Schenkelteilen 5, 6 in Form von exzentrischen Gelenken 7 nach der vorliegenden Erfindung realisiert ist.

## Patentansprüche

1. Zusammenklappbares Warndreieck für den Straßenverkehr, insbesondere für die Verwendung im Zweiradbereich, mit drei Schenkeln (2, 3, 4), welche zwischen einem zusammengeklappten Aufbewahrungszustand des Warndreiecks und einem Aufstellungszustand verstellbar sind, mit Füßen (8, 9), wobei die Schenkel (2, 3, 4) jeweils aus mindestens zwei separaten Schenkelteilen (5, 6) gebildet sind, welche paarweise über Gelenke (7) miteinander verbunden sind, wobei die Gelenke (7) zwischen den Schenkelteilen (5, 6) derart exzentrisch zur Mittenlängsachse der Schenkel (2, 3, 4) versetzt angeordnet sind, dass im zusammengeklappten Aufbewahrungszustand des Warndreiecks (1) die exzentrischen Gelenke (7) in einer gemeinsamen Achse in etwa senkrecht zur Aufspannfläche des Warndreiecks (1) übereinanderliegen, **dadurch gekennzeichnet, dass** die Gelenkachsen der exzentrischen Gelenke (7), die die Schenkelteile (5, 6) verbinden, im Wesentlichen senkrecht zur Aufspannfläche des Warndreiecks verlaufen.

2. Warndreieck (1) nach Anspruch 1, **dadurch gekennzeichnet, dass** die Schenkelteile (5, 6) jedes Schenkels (2, 3, 4) im zusammengeklappten Aufbewahrungszustand des Warndreiecks (1) jeweils paarweise mit den Schmalseiten aneinandergrenzend gegenüberliegen.

3. Warndreieck (1) nach einem der Ansprüche 1 oder 2, **dadurch gekennzeichnet, dass** die Vorderseite der Schenkel (2, 3, 4) jeweils mit Reflektoren (12, 13) derart versehen ist, dass ein durchgängiges Reflektorenband entlang des Außenumfangs des Warndreiecks (1) gebildet wird.

4. Warndreieck (1) nach einem der vorangegangenen Ansprüche, **dadurch gekennzeichnet, dass** die Reflektoren (12, 13), welche an der Vorderseite jedes Schenkelteils (5, 6) eines Schenkels (2, 3, 4) angebracht sind, jeweils in ein und derselben Ebene liegen.

5. Warndreieck (1) nach einem der vorangegangenen Ansprüche, **dadurch gekennzeichnet, dass** die Füße (8, 9) des Warndreiecks in Form von nach vorne und nach hinten vom Warndreieck vorragenden Flacheisen (8, 9) gebildet sind.

6. Warndreieck (1) nach Anspruch 5, **dadurch gekennzeichnet, dass** die Länge der Füße (8, 9) in etwa der Länge eines jeden Schenkelteils (5, 6) der Schenkel (2, 3, 4) des Warndreiecks (1) derart entspricht, dass die Füße (8, 9) im zusammengeklappten Zustand innerhalb der Außenmaße der Schenkelteile (5, 6) angeordnet sind.

7. Warndreieck (1) nach einem der vorangegangenen Ansprüche, **dadurch gekennzeichnet, dass** die exzentrischen Gelenke (7) zur Verbindung der Schenkelteile (5, 6) jeweils seitlich vorragend von den Schenkeln (2, 3, 4) angeordnet sind.

8. Warndreieck (1) nach einem der vorangegangenen Ansprüche, **dadurch gekennzeichnet, dass** das exzentrische Gelenk (7) des unteren Schenkels (3) nach außen vom Warndreieck (1) vorragt und dass die exzentrischen Gelenke (7) der beiden aufragenden Schenkel (2, 4) nach innen von dem Warndreieck (1) vorragen.

9. Warndreieck (1) nach einem der vorangegangenen Ansprüche, **dadurch gekennzeichnet, dass** an den Enden des unteren Schenkels (3) jeweils vorragende Halterungen (11) für die Füße (8, 9) angebracht sind.

10. Warndreieck (1) nach Anspruch 9, **dadurch gekennzeichnet, dass** die Halterungen (11) für die Füße (8, 9) im Verhältnis zur Längenmittelachse des unteren Schenkels (3) derart vorragen, dass sie im zusammengeklappten Zustand zwischen den Schenkelteilen (5, 6) gegenüberliegend von dem exzentrischen Gelenk (7) angeordnet sind.

11. Warndreieck (1) nach einem der vorangegangenen Ansprüche, **dadurch gekennzeichnet, dass** die Schenkel (2,3,4) identische Paare an Reflektoren (12, 13) aufweisen, wobei insbesondere die Reflektoren (12,13) eines Paares voneinander verschieden sind (Typ A und Typ B).

12. Warndreieck (1) nach einem der vorangegangenen Ansprüche, **dadurch gekennzeichnet, dass** Seitenschenkel (2,4) mit einem Basisschenkel (3) über Gelenke (10) verbunden sind, wobei einer der Seitenschenkel (2,3) auf der Vorderseite und der andere auf der Rückseite des Basisschenkels (3) angelenkt ist.

13. Warndreieck (1) nach Anspruch 12, **dadurch gekennzeichnet, dass** die Gelenke (10) auf einer Mittenlängsachse der Schenkel (2, 3, 4) angeordnet sind.

14. Warndreieck (1) nach einem der vorangegangenen Ansprüche, **dadurch gekennzeichnet, dass** die Seitenschenkel (2, 4) miteinander lösbar verbindbar sind.

## Claims

1. A foldable warning triangle for traffic applications, in particular for two wheel vehicle, comprising three arms (2, 3, 4) which are adjustable between a folded up storage condition of the warning triangle and a deployed condition, and comprising bases (8, 9), wherein the arms (2, 3, 4) are respectively formed from at least two separate arm components (5, 6) which are connected with one another in pairs through pivot links (7), wherein the pivot links (7) are arranged between the arm components (5, 6) eccentric relative to the longitudinal center axis of the arms (2, 3, 4) so that in the folded up storage condition of the warning triangle (1) the eccentric pivot links (7) are arranged on top of one another in a common axis approximately orthogonal to the unfolding surface of the warning triangle (1), wherein the pivot link axes of the eccentric pivot links (7) which connect the arm components (5, 6) extend substantially perpendicular to the fold out surface of the warning triangle.

2. The warning triangle (1) according to claim 1, wherein the arm components (5, 6) of each arm (2, 3, 4) in folded up storage condition of the warning triangle (1) are arranged opposite to one another so that the narrow sides are adjacent to one another.

3. The warning triangle (1) according to one of the claims 1 or 2, wherein the front sides of the arms (2, 3, 4) are respectively provided with reflectors (12, 13) so that a continuous reflector band is form along an outer circumference of the warning triangle (1).

4. The warning triangle (1) according to one of the preceding claims wherein the reflectors (12, 13) which are arranged at the front side of each arm component (5, 6) of an arm (2, 3, 4) are respectively arranged in the same plane.

5. The warning triangle (1) according to one of the preceding claims, wherein the bases (8, 9) of the warning triangle are configured as flat irons (8, 9) protruding from the warning triangle in forward and backward direction.

6. The warning triangle (1) according to claim 5, wherein the length of the bases (8, 9) approximately corresponds to the length of each arm component (5, 6) of the arms (2, 3, 4) of the warning triangle (1), so that the bases (8, 9) in folded up condition are arranged within the exterior dimensions of the arm components (5, 6).

7. The warning triangle (1) according to one of the preceding claims, wherein the eccentric pivot links (7) for connecting the arm components (5, 6) are respectively arranged laterally protruding from the arms (2, 3, 4).

8. The warning triangle (1) according to one of the preceding claims, wherein the eccentric pivot link (7) of the lower arm (3) protrudes from the warning triangle (1) in outward direction and wherein the eccentric pivot links (7) of the two upward protruding arms (2, 4) protrude in inward direction from the warning triangle (1).

9. The warning triangle (1) according to one of the preceding claims, wherein respective protruding supports (11) are arranged for the bases (8, 9) at ends of the lower arm (3).

10. The warning triangle (1) according to claim 9, wherein the supports (11) for the bases (8, 9) protrude relative to the longitudinal center axis of the lower arm (3), so that they are arranged in folded up condition between the arm components (5, 6) opposite from the eccentric pivot link (7).

11. The warning triangle (1) according to one of the preceding claims, wherein the arms (2, 3, 4) include identical pairs of reflectors (12, 13), wherein in particular the reflectors (12, 13) of a pair are different from one another (type A and type B).

12. The warning triangle (1) according to one of the preceding claims wherein the side arms (2, 4) are connected with a base arm (3) through pivot links (10), wherein one of the side arms (2, 3) is linked on a front side and the other is linked on a back side of the base arm (3).

13. The warning triangle (1) according to claim 12, wherein the links (10) are arranged on a center longitudinal axis of the arms (2, 3, 4).

14. The warning triangle (1) according to one of the preceding claims, wherein the side arms (2, 4) are connectable with one another in a disengageable manner.

## Revendications

1. Triangle pliable de signalisation pour le trafic routier en particulier pour l'utilisation dans le secteur des deux roues comprenant trois segments (2, 3, 4) réglables entre un état de rangement replié du triangle de signalisation et un état monté, et comprenant des pieds (8, 9), les segments (2, 3, 4) étant formés respectivement par au moins deux parties de segments (5, 6) séparées qui sont reliées par paire par des articulations (7), les articulations (7) étant disposées en décalé entre les parties de segments (5, 6) excentriquement par rapport à l'axe longitudinal médian des segments (2, 3, 4) de sorte qu'à l'état replié de rangement du triangle de signalisation (1), les articulations excentriques (7) étant superposées dans un axe commun approximativement perpendiculairement à la surface de dépliage du triangle de signalisation (1), **caractérisé en ce que** les axes des articulations excentriques (7) qui relient les parties de segment (5, 6) s'étendent sensiblement perpendiculairement à la surface d'ouverture.

2. Triangle de signalisation (1) selon la revendication 1, **caractérisé en ce que** les parties de segment (5, 6) de chaque segment (2, 3, 4) sont opposées dans l'état de rangement replié du triangle de signalisation (1), respectivement par paire aux faces étroites contiguës.

3. Triangle de signalisation (1) selon l'une des revendications 1 ou 2, **caractérisé en ce que** la face avant des branches (2, 3, 4) est munie respectivement de réflecteurs (12, 13) de sorte qu'une bande réfléchissantes continue est formée le long de la périphérie externe du triangle de signalisation (1).

4. Triangle de signalisation (1) selon l'une des revendications précédentes, **caractérisé en ce que** les réflecteurs (12, 13) qui sont disposés sur la face avant de chaque partie de segment (5, 6) d'un segment (2, 3, 4), se trouvent respectivement dans un seul et même plan.

5. Triangle de signalisation (1) selon l'une des revendications précédentes, **caractérisé en ce que** les pieds (8, 9) du triangle de signalisation ont la forme de fers plats (8, 9) faisant saillie vers l'avant et vers l'arrière.

6. Triangle de signalisation (1) selon la revendication 5, **caractérisé en ce que** la longueur des pieds (8, 9) correspond approximativement à la longueur de chaque partie de segment (5, 6) des segments (2, 3, 4) du triangle de signalisation (1) de sorte que les pieds (8, 9) sont disposés à l'état plié à l'intérieur des dimensions externes des parties de segment (5, 6)

7. Triangle de signalisation (1) selon l'une des revendications précédentes, **caractérisé en ce que** les articulations excentriques (7) pour la liaison des parties de segments (5, 6) sont disposées respectivement en dépassant latéralement des segments (2, 3, 4).

8. Triangle de signalisation (1) selon l'une des revendications précédentes, **caractérisé en ce que** l'articulation excentrique (7) du segment inférieur (3) dépasse vers l'extérieur du triangle de signalisation (1) et **en ce que** les articulations excentriques (7) des deux segments (2, 4) dépassent vers l'intérieur du triangle de signalisation (1).

9. Triangle de signalisation (1) selon l'une des revendications précédentes, **caractérisé en ce qu'**il est prévu pour les pieds (8, 9) des fixations (11) faisant saillie sur les extrémités du segment inférieur (3) sont disposées respectivement.

10. Triangle de signalisation (1) selon la revendication 9, **caractérisé en ce que** les fixations (11) pour les pieds (8, 9) font saillie par rapport à l'axe médian longitudinal du segment inférieur (3) de sorte qu'elles sont disposées à l'état plié entre les parties de segment (5, 6) en faisant face à l'articulation excentrique (7).

11. Triangle de signalisation (1) selon l'une des revendications précédentes, **caractérisé en ce que** les segments (2, 3, 4) présentent des paires identiques de réflecteurs (12, 13), en particulier les réflecteurs (12, 13) d'une paire étant différents l'un de l'autre (type A et type B).

12. Triangle de signalisation (1) selon l'une des revendications précédentes, **caractérisé en ce que** des segments latéraux (2, 4) sont reliés à un segment de base (3) par des articulations (10), l'un des segments latéraux (2, 3) étant articulé sur la face avant et l'autre sur la face arrière du segment de base (3).

13. Triangle de signalisation (1) selon la revendication 12, **caractérisé en ce que** les articulations (10) sont disposées sur un axe longitudinal médian des segments (2, 3, 4).

14. Triangle de signalisation (1) selon l'une des revendications précédentes, **caractérisé en ce que** les segments latéraux (2, 4) sont reliés l'un à l'autre de manière amovible.
